# EUROPEAN PATENT APPLICATION

(11) **EP 2 528 420 A2**
(43) Date of publication of application: **28.11.2012**
(21) Application number: 12169348.5
(22) Date of filing: 24.05.2012
(51) Int. Cl.: H05B 33/08

(54) **LIGHT EMITTING DEVICE, DISPLAY DEVICE, AND METHOD OF DRIVING ORGANIC ELECTROLUMINESCENT DEVICE**

(30) Priority: 27.05.2011 JP 2011119459
(71) Applicant: Kabushiki Kaisha Toshiba, Tokyo 105-8001 (JP); Toshiba Lighting & Technology Corporation, Yokosuka-shi Kanagawa 237-8510 (JP)
(72) Inventor: Sugi, Keiji, Tokyo, 105-8001 (JP); Otake, Hirokazu, Kanagawa, 237-8510 (JP); Takasaka, Keitaro, Kanagawa, 237-8510 (JP); Sawabe, Tomoaki, Tokyo, 105-8001 (JP); Yonehara, Toshiya, Tokyo, 105-8001 (JP); Ono, Tomio, Tokyo, 105-8001 (JP); Enomoto, Shintaro, Tokyo, 105-8001 (JP); Sugizaki, Tomoko, Tokyo, 105-8001 (JP); Kato, Daimotsu, Tokyo, 105-8001 (JP); Amano, Akio, Tokyo, 105-8001 (JP); Shibuya, Nobuo, Tokyo, 105-8001 (JP)
(74) Representative: Willquist, Sofia Ellinor

(57) **Abstract**

According to one embodiment, there is provided a light emitting device including an organic electroluminescent device (10) that includes a first electrode, a light emitting layer arranged above the first electrode, and a second electrode arranged above the light emitting layer, a drive circuit that supplies a drive current between the first electrode and the second electrode to drive the organic electroluminescent device (10), and means for stopping the driving of the organic electroluminescent device (10) when a value of the drive current falls below a predetermined value.

## Description

### FIELD

Embodiments described herein relate generally to a light emitting device, a display device, and a method of driving an organic electroluminescent device.

### BACKGROUND

Recently, an organic electroluminescent device (hereinafter, also referred to as an organic EL device or an OLED) attracts attention for use in light emitting devices including illumination devices or flat surface light sources, and display devices. The organic electroluminescent device is configured by interposing a light emitting layer formed of organic material between a pair of electrodes including a cathode and an anode. When a voltage is applied to the device, electrons are injected from the cathode to the light emitting layer and holes are injected from the anode to the light emitting layer. In the light emitting layer, the holes and the electrons are recombined to generate excitons. When the excitons are radiatively deactivated, light is emitted.

In the manufacturing process and the like of the organic electroluminescent device, a foreign substance such as dust may be attached to a device panel. Foreign substances attached to the device panel may cause a leakage current, which may lead to defects and further to the device breakage. Therefore, preventing defects caused by the leakage current and preventing the lifetime of the device from being shortened by such defects are necessary.

### DESCRIPTION OF THE DRAWINGS

FIG. 1 is a circuit diagram illustrating a light emitting device according to a first embodiment.
FIG. 2 is a diagram illustrating an external appearance of an OLED panel according to Example 1-1.
FIG. 3 is a cross-sectional view illustrating the OLED panel according to Example 1-1.
FIG. 4 is a cross-sectional view of the OLED panel according to Example 1-1 taken along the line A-A'.
FIG. 5 is a diagram illustrating an external appearance of an OLED panel according to Example 1-2.
FIG. 6 is a cross-sectional view of the OLED panel according to Example 1-2 taken along the line B-B'.
FIGS. 7A and 7B are diagrams illustrating a model assuming that an OLED is deteriorated by low-current driving.
FIG. 8 is a diagram illustrating the device breakage.
FIGS. 9A to 9D are graphs illustrating current-voltage characteristics and current-luminance characteristics of a normal device and a defective device.
FIGS. 10A and 10B are diagrams illustrating results of observing a leakage portion using an optical microscope.
FIGS. 11A to 11C are diagrams illustrating an external appearance of the light emitting device according to the first embodiment.
FIG. 12 is a diagram illustrating a display device according to a second embodiment.

### DETAILED DESCRIPTION

According to an embodiment, there is provided a light emitting device including: an organic electroluminescent device that includes a first electrode, a light emitting layer arranged above the first electrode, and a second electrode arranged above the light emitting layer; a drive circuit that supplies a drive current between the first electrode and the second electrode to drive the organic electroluminescent device; and a drive stop circuit that stops driving of the organic electroluminescent device when a value of the drive current falls below a predetermined value.

Hereinafter embodiments will be described with reference to the drawings.

### First Embodiment

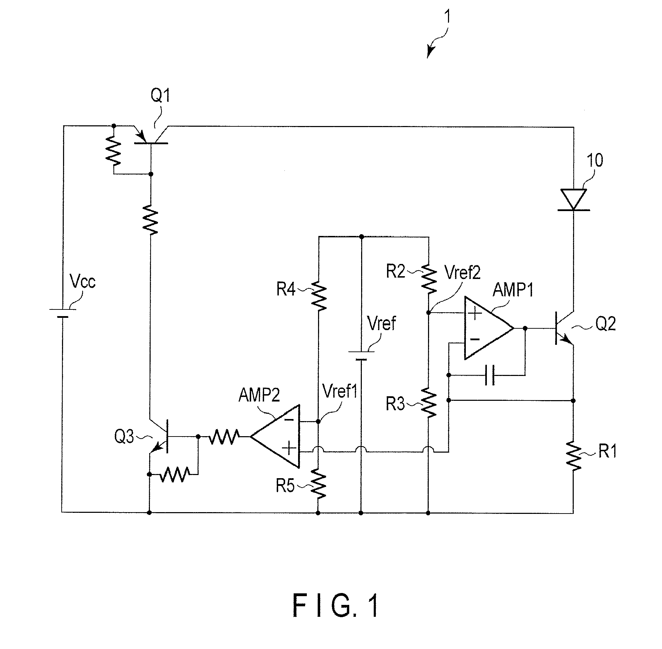

FIG. 1 is a circuit diagram illustrating a light emitting device according to a first embodiment. The light emitting device 1 includes an organic light emitting diode (OLED) 10, a drive circuit for driving the OLED 10, and a circuit power supply (Vcc) for driving the drive circuit. As the circuit power supply (Vcc), a battery such as a dry cell is assumed to be used. The drive circuit illustrated in FIG. 1 configures a constant current circuit.

In this embodiment, the drive circuit for driving the OLED 10 monitors a current (drive current) for driving the OLED 10 and forcibly stops the driving when a value of the drive current falls below a predetermined value. Specifically, an emitter terminal of a transistor Q1 is connected to a positive terminal of the circuit power supply (Vcc). An anode of the OLED 10 is connected to a collector terminal of the transistor Q1. A cathode of the OLED 10 is connected to a collector terminal of a transistor Q2. An emitter terminal of the transistor Q2 is connected to a resistor R1. The other terminal of the resistor R1 is connected to a negative terminal of the circuit power supply (Vcc). An output terminal of an operational amplifier (differential amplifier) AMP 1 is connected to a base terminal of the transistor Q2. A non-inverting input terminal of the operational amplifier AMP1 is connected to resistors R2 and R3. An inverting input terminal of the operational amplifier AMP1 is connected to a non-inverting input terminal of an operational amplifier AMP2. An inverting input terminal of the operational amplifier AMP2 is connected to resistors R4 and R5. An output terminal of the operational amplifier AMP2 is connected to a base terminal of a transistor Q3. An emitter terminal of the transistor Q3 is connected to a base terminal of the transistor Q1 through a resistor. In the drive circuit illustrated in FIG. 1, a device for stopping the driving of the OLED 10 includes at least the transistor Q1, the transistor Q3, and the operational amplifier AMP2.

Normally, when light is turned on, the operational amplifier AMP1 operates such that a reference voltage Vref2 input to the non-inverting input terminal of the operational amplifier AMP2 is the same as a voltage of the resistor R1 which detects a current flowing through the OLED 10. As a result, an output current of the transistor Q2 is controlled to be constant. The above-described operation is a normal operation as a constant current circuit, and the drive current is supplied between the terminals of the OLED 10.

As the circuit power supply, a battery such as a dry cell is assumed to be used, and a power supply voltage Vcc is gradually dropped by the discharge of the battery. Along with the drop of the power supply voltage Vcc, a collector-emitter voltage V_{CE} of the transistor Q2 is also dropped gradually. Finally, the transistor Q2 enters the saturation region and is completely turned on. From this time, the drive circuit loses a current control function for voltage fluctuation and the like.

When the power supply voltage Vcc is further dropped, the current flowing through the OELD 10 also starts dropping and the current of the resistor R1 for detecting the output current of the OLED 10 is also dropped. The operational amplifier AMP2 monitors the current by monitoring the current of the resistor R1. That is, the voltage of the non-inverting input terminal of the operational amplifier AMP2 is equal to that of the resistor R1, and the voltage of the inverting input terminal of the operational amplifier AMP2 is equal to a setting reference voltage Vref1. In addition, the setting reference voltage Vref1 is set in advance according to a predetermined lower limit current. This lower limit current corresponds to a lower limit value of the current which is allowed to flow through the OLED 10, that is, a lower limit value of the drive current. The setting of the lower limit value of the drive current will be described below in detail.

The operational amplifier AMP2 outputs a High or Low (ON or OFF) signal according to the difference in potential between the non-inverting input terminal and the inverting input terminal. From the time when the voltage of the resistor R1 falls below the setting reference voltage Vref1, the operational amplifier AMP2 outputs the Low signal. As a result, the transistor Q3 is turned off, and the transistor Q1 is turned off. Therefore, the entire drive circuit is turned off and the driving of the OLED 10 is stopped.

The configuration illustrated in FIG. 1 is merely an example, and various modifications can be made in a range being apparent to a person skilled in the art. For example, in the above-described configuration, a function of forcibly stopping the driving when a value of the drive current falls below a predetermined value is provided inside the drive circuit. However, the same function may be provided outside the drive circuit. In addition, the basic configuration of the drive circuit is a constant current circuit, but the OLED 10 may be driven at a constant voltage. That is, a constant voltage circuit may be used as the drive circuit for driving the OLED 10 and may have a function of monitoring a current flowing through the OLED 10 and forcibly stopping the circuit when the current falls below a predetermined current. In addition, the battery such as a dry cell may be switched to an AC power supply so as to drive the light emitting device 1.

Examples of the OLED 10 will be described. In Example 1-1 below, the OLED 10 is configured as an OLED panel using a single organic electroluminescent device. In Example 1-2, the OLED 10 is configured as an OLED panel in which plural organic electroluminescent devices are connected to each other in series.

### Example 1-1

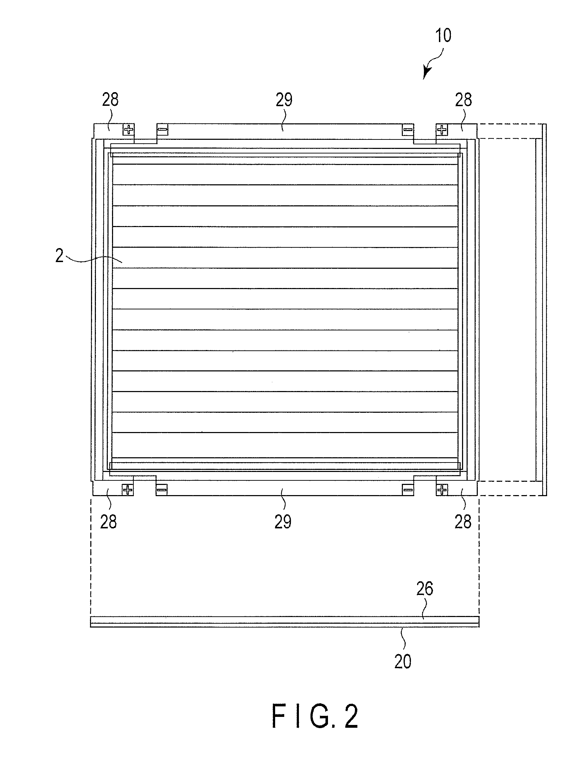

FIG. 2 is a diagram illustrating an external appearance according to an OLED panel according to Example 1-1. A pad portion 28 of the first electrode and a pad portion 29 of the second electrode for driving the OLED 10 are provided in an end portion of a light emitting area 2. The first and second electrodes are a pair of electrodes in which one electrode is an anode and the other electrode is a cathode. In this description, the first electrode is the anode and the second electrode is the cathode but may be vice versa. A device substrate 20 supports other members including a sealing substrate 26 and thus preferably has a strength to a degree that can hold a layer formed thereabove. The shape, structure, size, and the like of the device substrate 20 are not particularly limited and can be appropriately selected according to applications and purposes. The thickness of the substrate 20 is not particularly limited as long as the substrate has a sufficient strength for supporting the other members.

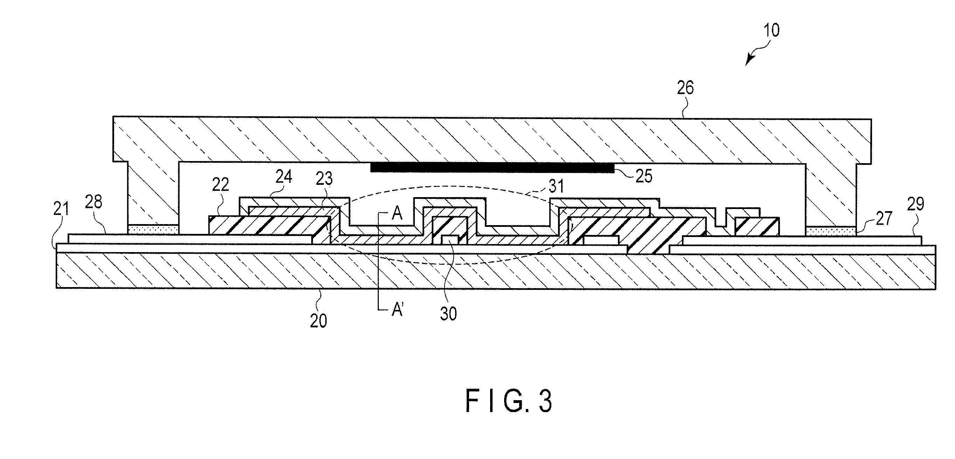

FIG. 3 is a cross-sectional view illustrating the OLED panel according to Example 1-1.

In this example, alkali-free glass was used for the device substrate 20. Specific material examples of the device substrate 20 include transparent or semi-transparent fused quartz, transparent glass such as alkali or alkali-free glass, polyethylene terephthalate, polycarbonate, polymethyl methacrylate, polypropylene, polyethylene, polymer film formed of transparent resin such as amorphous polyolefin or fluororesin, and transparent ceramics. A glass substrate, a plastic substrate or the like with a high refractive index of about 1.6 to 1.9 may be used.

A 110 nm-thick indium tin oxide (ITO) layer (first electrode) 21 was formed above the device substrate 20. Furthermore, a 50 nm-thick molybdenum (Mo) layer, a 600 nm-thick aluminum (A1) layer, and a 50 nm-thick Mo layer were laminated to form a film (Mo-Al-Mo layer 28). Here, a thickness of the ITO layer 21 is determined by the design of a resistance value, a flatness, and a light extraction method, and varies depending on device design. In addition, the thicknesses of the respective layers of the Mo-Al-Mo layer 28 vary depending on device design. Here, Mo, Al, and Mo are used for the layer 28, but alloys of Mo and Nb, Al and Nd, and Mo and Nb may be used. That is, an alloy of molybdenum and niobium may be used instead of molybdenum and an alloy of aluminum and neodymium may be used instead of aluminum. Alternatively, instead of the layer 28 of molybdenum, aluminum, and molybdenum, a layer of titanium, aluminum, and titanium (Ti-Al-Ti layer) may be used. The layer 28 may not be formed by laminating layers.

Between the device substrate 20 and the ITO layer 21, a barrier layer such as a silicon oxynitride (SiN) layer or a layer improving light extraction efficiency by scattering, refraction, diffraction and the like may be formed. Furthermore, the ITO layer 21 and the Mo-Al-Mo layer 28 may be laminated reversely.

The Mo-Al-Mo layer 28 and the ITO layer 21 were patterned by photolithography. Next, an insulating layer 22 is formed with a novolac-based positive resist. Materials of the insulating layer used herein preferably has a low-moisture adsorption and a strong tolerance to a pretreatment, such as oxygen plasma treatment, of organic EL deposition, and may be other resist, polyimide, acryl, or the like.

After UV-ozone cleaning, an organic layer 23 was formed and then a 150 nm-thick Al cathode 24 (second electrode) was formed by vapor deposition. Here, before the deposition, the insulating layer 22 may be annealed in vacuum or in a glove box under nitrogen atmosphere to evaporate moisture adsorbed to the insulating layer 22. Furthermore, before the deposition, oxygen plasma treatment or argon plasma treatment may be performed. When oxygen plasma treatment or argon plasma treatment is performed, UV-ozone cleaning treatment may be omitted.

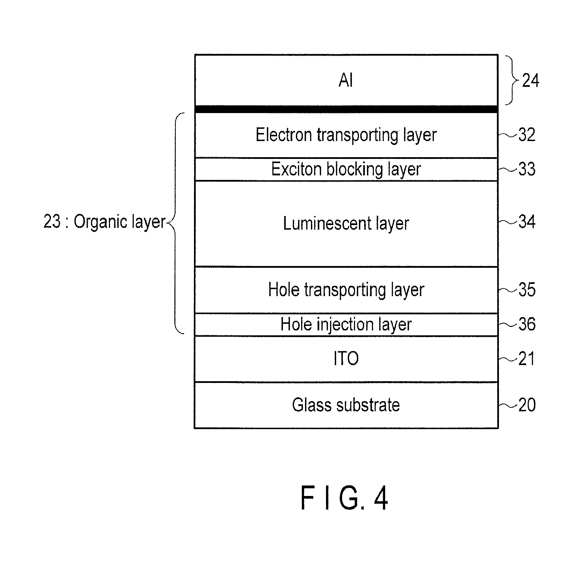

FIG. 4 is a cross-sectional view of the OLED panel of FIG. 3 taken along the line A-A' and illustrates the details of the organic layer 23. The organic layer 23 includes plural layers of an electron transporting layer 32, an exciton blocking layer 33, a light emitting layer 34, a hole transporting layer 35, a hole injection layer 36 and the like, and is designed according to requirement specification. The light emitting layer 34 contains a phosphorescent material or a fluorescent material. In addition, the drawing illustrates that the Al cathode 24 contains an electron injection layer (LiF). The respective layers are not necessarily formed by vapor deposition but may be formed by, for example, ink-jet method or coating method such as slit coating, meniscus coating, or gravure printing.

After the deposition of the Al cathode 24, the layer was transported to a glove box under nitrogen atmosphere so as not to be exposed to the air and was sealed by bonding the layer with a countersunk glass 26. As a seal material 27, a UV curable resin was used. The sealing method may be any other method, for example, sealing which uses a SiN layer or the like, or Frit sealing.

In FIG. 3, reference numeral 25 represents a desiccant (getter) and reference numeral 30 represents an auxiliary interconnect. Reference numeral 31 represents a light emitting area of the OLED panel according to Example 1-1.

Although not illustrated in the drawing, in order to increase light extraction efficiency, a microlens sheet (a φ30 μm-thick microlens array manufactured by Optmate Corporation) was bonded to a surface, which is opposite to the surface provided with the organic layer 23, of the device substrate 20. The light extraction sheet may use scattering or the like. In addition, a glass substrate may be processed directly instead of bonding the light extraction sheet.

The pad portions 28 and 29 of the first and second electrodes illustrated in FIG. 3 were soldered to a harness to connect the OLED panel of this example to the drive circuit illustrated in FIG. 1. The OLED panel and the drive circuit are connected to each other using a flexible printed circuit (FPC).

### Example 1-2

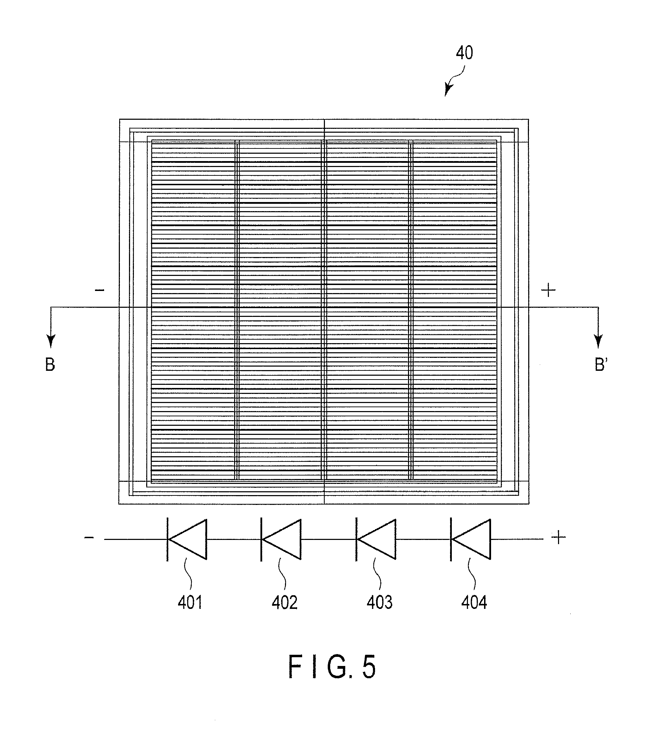

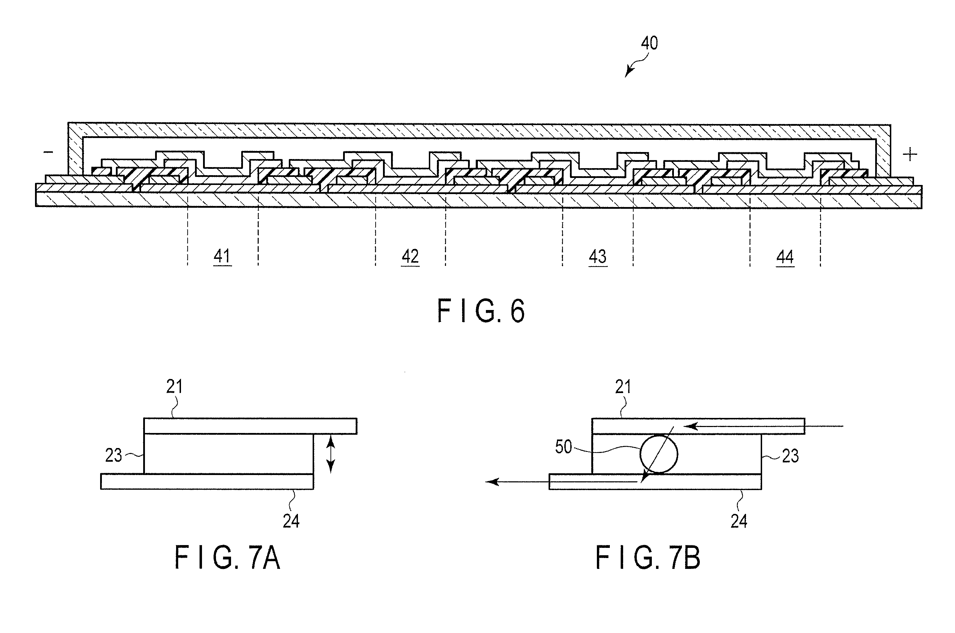

FIG. 5 is diagram illustrating an external appearance of an OLED panel according to Example 1-2. As illustrated in the same drawing, the OLED panel 40 is configured as a single OLED panel by connecting plural organic electroluminescent devices in series. In Example 1-2, four organic electroluminescent devices 401 to 404 are connected to each other in series. FIG. 6 is a cross-sectional view of the OLED panel 40 according to this example taken along the line B-B'. Plural light emitting portions 41 to 44 (segments 1 to 4) correspond to the organic electroluminescent devices 401 to 404. By using the OLED 40 according to Example 1-2 instead of the OLED 10 illustrated in FIG. 1, a configuration in which a current flowing through the OLED 40 in the drive circuit is monitored and the driving of the OLED 40 is stopped by turning off the drive circuit when the current is equal to or lower than a lower limit current, may be employed.

The present inventors found that leakage occurs when the OLED is driven at a low current. Hereinafter, a problem of leakage caused when the OLED 10 is driven at a low current will be described.

FIGS. 7A and 7B are diagrams illustrating a model assuming that an OLED is deteriorated by low-current driving. As illustrated in FIG. 7A, the organic layer 23 is interposed between the first electrode (pad portion thereof) 21 and the second electrode (pad portion thereof) 24. As described above, the first electrode and the second electrode are a pair of electrodes in which one electrode is an anode and the other electrode is a cathode. In general, the organic layer 23 has a thin thickness of about several ten nm to several hundred nm. As illustrated in FIG. 7B, when a foreign substance 50 such as dirt or dust is attached to the organic layer 23, the foreign substance 50 causes a leakage current, for example, as indicated by the arrow. That is, since the organic layer 23 is thin, the first electrode 28 and the second electrode 29 are electrically connected to each other easily through the foreign substance 50. As a result, short circuit easily occurs. When the area of the OLED increases (increase in the size of the device), a probability that a foreign substance may be mixed into the device in the manufacturing process and the like is increased. The above phenomenon brings about the increase of the number of "leakage spots" where a foreign substance causes a leakage current.

In this embodiment, the following is assumed for the deterioration of the OLED caused by low-current driving. That is, in a low-current (low-voltage) area, when there is a path of the same order of leakage current as that of a current required when light is emitted, a voltage is not applied to the organic electroluminescent device and only the leakage current flows. On the other hand, when the OLED is driven by a current (voltage) equal to or higher than a predetermined value, a leakage current path is burned out or a voltage is applied to the entire device for some reasons. As a result, the leakage disappears and light starts emitting.

When only a leakage current flows during low-current driving, a portion where there is a foreign substance causing the leakage current generates heat. As a result, there is a possibility that the device may be broken.

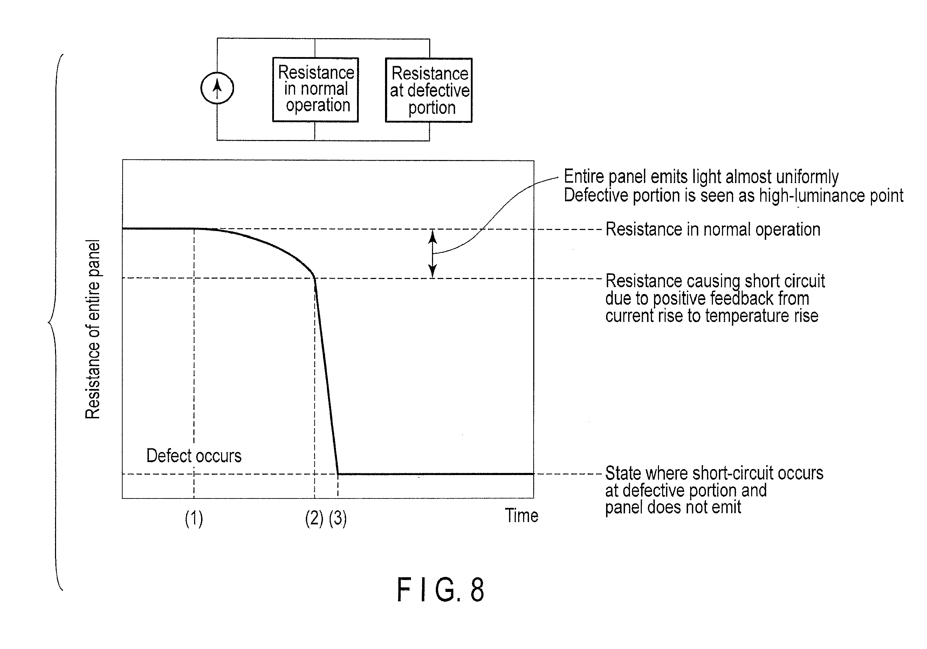

FIG. 8 is a diagram illustrating the device breakage. The same drawing is a graph illustrating the change over time of a resistance value of the entire panel. The resistance of the entire panel includes a resistance in normal operation and a resistance at a defective portion. It is assumed that a defect occurs at a time (1) illustrated in the same drawing. Before the time (1), the entire panel uniformly emits light, but when a defect occurs, a point with a relatively high luminance is observed at that portion. Thereafter, the resistance which was normal until the time (1) starts changing up to a resistance causing a short circuit due to a positive feedback from a current rise to a temperature rise. Short-circuit occurs at the defective portion in a short period of time from a time (2) to a time (3), which leads to the device breakage. As a result, the resistance is dropped to a large degree and thus the panel does not emit light anymore.

In this embodiment, a model in which an OLED deteriorates during the above-described low-current driving is assumed. Specific test results (which will be described below) performed by the present inventors found a phenomenon that a leakage easily occurs when an organic electroluminescent device is driven at a low current equal to or lower than 30 mA. When a foreign substance attached to an organic layer causes a leakage as described above, such a phenomenon may be avoidable if the foreign substance can be completely removed in the process of manufacturing the OLED panel. However, when a large-size OLED panel, for example, is manufactured in low-cost facility such as a clean room with a relatively low air cleanliness, removing the foreign substance or the like completely is difficult.

As a countermeasure for preventing such a device breakage, the OLED is driven by a current (voltage) equal to or higher than a predetermined value. In the configuration illustrated in FIG. 1, the drive current of the OLED 10 is monitored by the drive circuit, and the driving of the OLED 10 is stopped when the current is lower than the lower limit current, that is 30 mA. Accordingly, the device breakage is prevented in advance. As described above, when a dry cell is assumed as a power supply as in FIG. 1, the drive circuit configuring a constant current circuit is driven by the dry cell and the OLED 10 is driven by the drive circuit. When the output voltage Vcc of the dry cell is dropped, the drive circuit cannot maintain the current constant and thus the drive current is gradually dropped. When the light emitting device 1 continues to be used without changing the dry cell, the OLED 10 is driven at a current lower than 30 mA, thereby causing a leakage. However, in this embodiment, when the drive current falls below the lower limit current, that is, 30 mA, the driving of the OLED 10 is forcibly stopped. Here, the lower limit current is not necessarily 30 mA exactly and may be empirically determined in a predetermined range. That is, the lower limit current may be appropriately determined in a range from 0 mA to 30 mA.

The definition of driving the OLED by a voltage (current) equal to or higher than a predetermined value will be described with reference to results of measuring device characteristics.

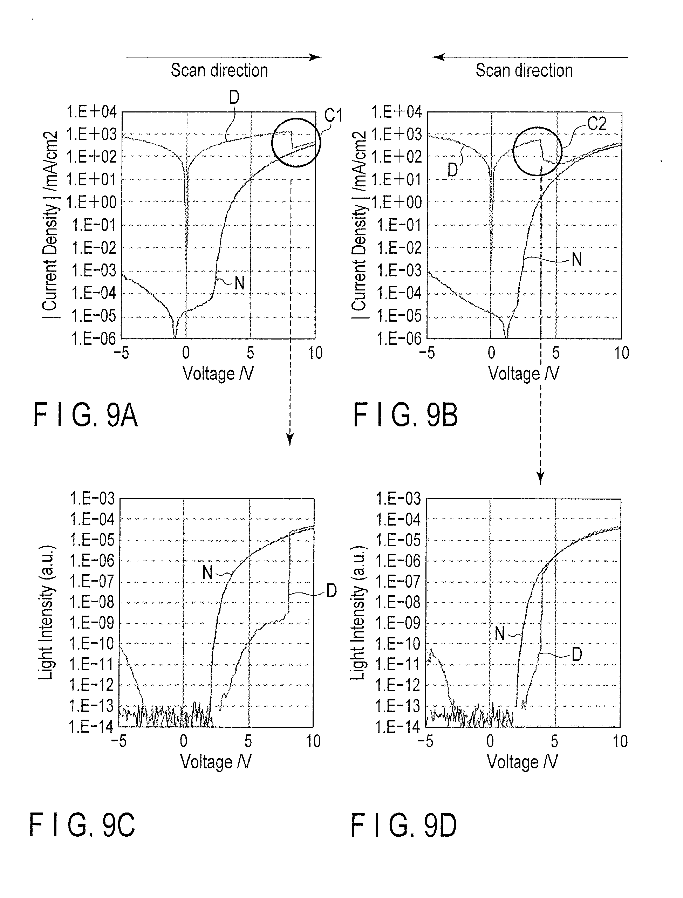

FIGS. 9A to 9D are graphs illustrating current-voltage characteristics and current-luminance characteristics of a normal device and a defective device. In the graphs of FIGS. 9A to 9D, a curve D indicates defective device and a curve N indicates a normal device. As illustrated in FIG. 9A, when the voltage is swept from -5 V to +10 V, a large leakage current of several hundred mA/cm² flows through the defective device. However, as indicated by a reference numeral C1, the leakage current is reduced around +8 V and the current and luminance that are almost equal to those of the normal device (refer to FIG. 9C) are shown.

On the other hand, when the voltage is swept from +10 V to -5 V as illustrated in FIG. 9B, the current and luminance which were almost equal to those of the normal device return to the characteristics of the defective device, that is, a large leakage current of several hundred mA/cm² occurs around +4 V as indicated by a reference numeral C2. As seen from FIG. 9D, the luminance starts dropping to a large degree from this time. Such behavior is observed occasionally when the organic EL device is manufactured in a clean room with a low air cleanliness. In general electronic devices, a defect such as leakage easily occurs in the case of high voltage. However, in the organic EL device manufactured in a clean room with a low air cleanliness, the leakage occurs more often in the case of low voltage. Even in the same device, characteristics equivalent to those of the normal device are shown at higher voltage. These characteristics are distinctive characteristics for organic EL. The current-voltage characteristics of the organic EL device are non-linear and the resistance is extremely high at a low voltage where light is not emitted. Here, when there is a leakage portion caused by a foreign substance or dust, the resistance is high at portions other than the leakage portion, and thus the current concentrates on the leakage portion. On the other hand, when light is emitted, the resistance of the organic EL device is dropped and is extremely low when light with a high luminance is emitted. At this time, it is considered that the resistances of the portions other than the leakage portion are lower than that of the leakage portion and thus the current flows through the entire device, thereby exhibiting characteristics equivalent to those of the normal device.

When the driving is continued at a low voltage in which light is not emitted or low-luminance light is emitted, the current continuously flows through the leakage portion. By doing so, the temperature of the leakage portion rises due to Joule heat, which changes characteristics of the periphery organic layer and the like. As a result, the leakage portion is changed to be irreversible. The organic EL device has a large area, and in particular, has a large size of several square centimeters to several ten square centimeters for illumination. If there is even a single leakage portion in such a large-size device as described above, the device becomes a defective product and the yield ratio is significantly deteriorated. In addition, when countermeasures, for example, increasing the air cleanliness of a clean room, are taken in order to reduce a foreign substance or dust causing the defect, the manufacture cost is increased.

On the other hand, in this embodiment, the driving of the device is avoided at a low voltage in which light is not emitted or low-luminance light is emitted as much as possible, and can be performed in a normal operation range. Therefore, even a device having some foreign substances or dust can be used as a good product. Accordingly, the leakage is reduced while the manufacture cost is suppressed and thus the yield ratio may be greatly improved.

This embodiment focuses attention on the rate of the drive current rise (and (or) drive current fall) as well as on determining the low limit of the drive current of the OLED to forcibly stop the driving. That is, a time required for the drive current, which drives the OLED through the drive circuit, to rise to a predetermined current value (in this embodiment, 30 mA or more) is preferably at least within 2 milliseconds. Likewise, when light is turned off, a time required for the same drive current to fall from the predetermined current value (in this embodiment, 30 mA or more) to zero is preferably within at least 2 milliseconds. In such a configuration, the leakage which is caused by driving the OLED at a low current is suppressed, thereby preventing the device breakage. The rise and fall time is not necessarily 2 milliseconds exactly and may have some variations. Although also depending on costs of selected parts, a configuration in which the drive circuit operates within a high speed of about 2 milliseconds is preferable. In the configuration of this embodiment illustrated in FIG. 1, the transistors Q1 to Q3 and the operational amplifiers AMP 1 and 2 are configured such that the current rises or falls within 2 milliseconds. By the rise or fall time within 2 milliseconds, the defect caused by the leakage current can be suppressed.

Generally, in illumination devices of the related art, the rise and fall time is relatively long. That is, it is preferable that the illumination is gradually turned on or off after a given time. In addition, while considering the manufacture cost, low-cost parts can be selected for the drive circuit and the like of the illumination device as much as possible. In this case, the rise time (fall time) of a constant current circuit is generally long.

Hereinafter, using a semi-transparent panel with a diameter of 150 mm which is configured by the serially connected devices as described in Example 1-2, results of a test of turning light on and off will be shown. The test time was 10 minutes, and the test of ON (1 second)-OFF (1 second) was performed. The luminance was measured by BM-7 with a view angle of 2.0. The luminance [cd/m²] when the drive current [mA] is changed, the actual luminance [cd/m], and the pass-fail are shown in the following tables. Here, the rise time of the drive current is 2 milliseconds. When the drive current is a low current of 5.8 mA and 22.6 mA, the leakage current occurs (a pass is indicated by a symbol O and a fail is indicated by a symbol X).

**Table 1**

| Lot. 11020704 | | | | |
|---|---|---|---|---|
| Luminance [cd/m²] | Actual Luminance [cd/m] | Current [mA] | Pass-Fail | Note |
| 837 | 3138.75 | 127 | O | Rise Time of 2 ms |
| 271 | 1016.25 | 39.1 | O | Rise Time of 2 ms |
| 130 | 487.5 | 18 | O | Rise Time of 2 ms |
| 61.5 | 230.625 | 8.5 | O | Rise Time of 2 ms |
| 30 | 112.5 | 4.1 | O | Rise Time of 2 ms |

| Lot. 110113003 | | | | |
|---|---|---|---|---|
| Luminance [cd/m²] | Actual Luminance [cd/m] | Current [mA] | Pass-Fail | Note |
| 804 | 3015 | 134 | O | Rise Time of 2 ms |
| 279 | 1046.25 | 45.7 | O | Rise Time of 2 ms |
| 128 | 480 | 22.6 | X | Rise Time of 2 ms |
| | 0 | | | Rise Time of 2 ms |
| | 0 | | | Rise Time of 2 ms |

| Lot. 11020405 | | | | |
|---|---|---|---|---|
| Luminance [cd/m²] | Actual Luminance [cd/m] | Current [mA] | Pass-Fail | Note |
| 818 | 3067.5 | 137 | O | Rise Time of 2 ms |
| 293.2 | 1099.5 | 47.6 | O | Rise Time of 2 ms |
| 132.1 | 495.375 | 21.4 | O | Rise Time of 2 ms |
| 57.7 | 216.375 | 9.8 | O | Rise Time of 2 ms |
| 29.4 | 110.25 | 5.8 | X | Rise Time of 2 ms |

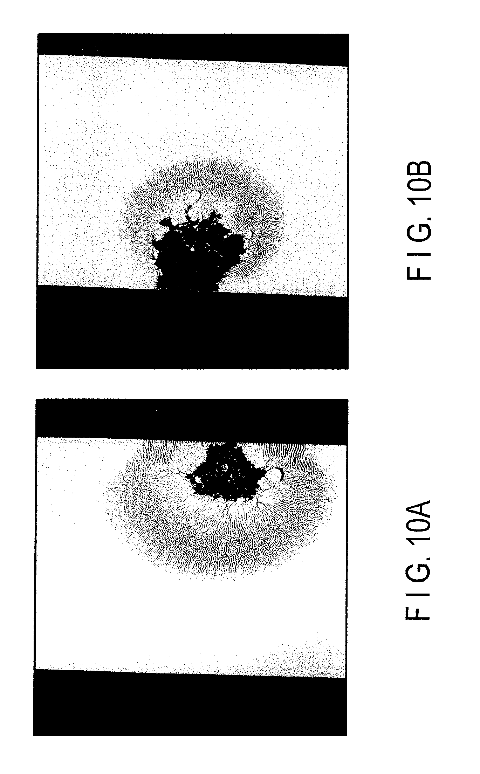

FIGS. 10A and 10B illustrate results of observing a leakage portion using an optical microscope. As illustrated in these drawings, breakage of the organic layer was observed. The following is considered: a leakage current causes the current to be concentrated and thus the device is heated, thereby resulting in the breakage.

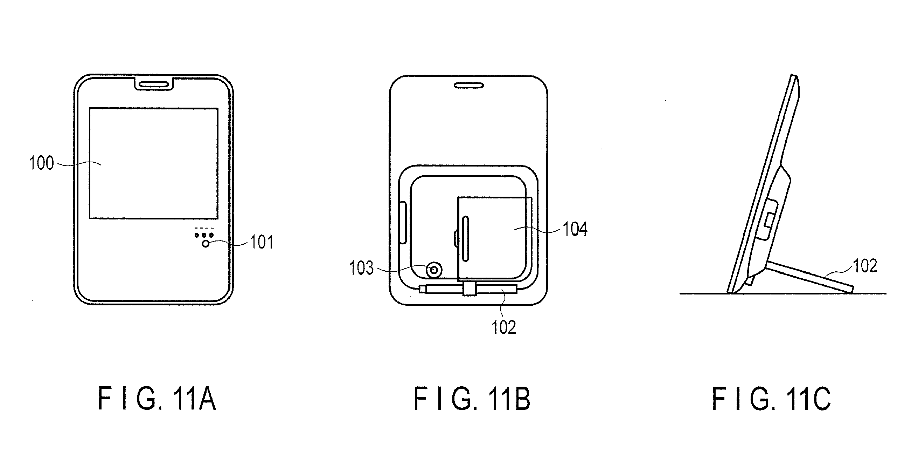

FIGS. 11A to 11C are diagrams illustrating an external appearance of the light emitting device according to the first embodiment. FIG. 11A is a front view of the light emitting device, FIG. 11B is a rear side thereof, and FIG. 11C is a side view thereof. In the same drawing, reference numeral 100 represents a light emitting area, reference numeral 101 represents a power supply switch, reference numeral 102 represents a stand, reference numeral 103 represents a screw hole, and reference numeral 104 represents a battery housing portion. The stand 102 supports a case body by inserting the stand into the screw hole 103.

### Second Embodiment

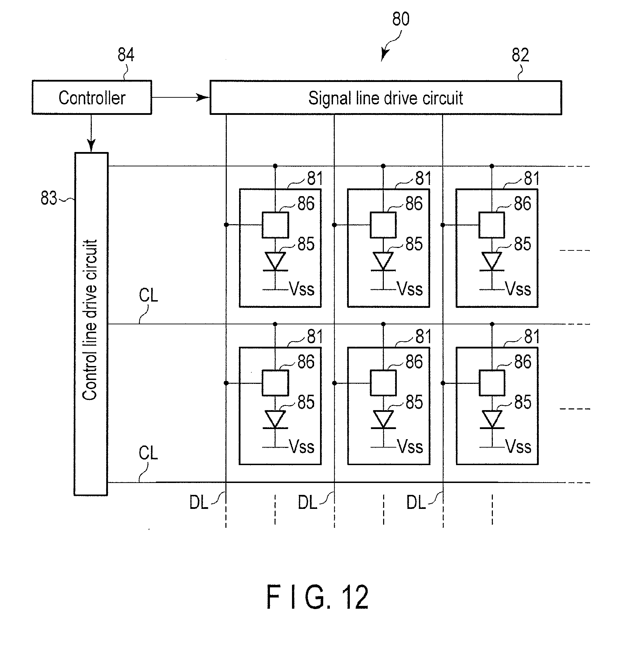

As an application example of the organic electroluminescent device, display devices are used in addition to the above-described light emitting device. FIG. 12 is a circuit diagram illustrating a display device according to a second embodiment.

A display device 80 illustrated in FIG. 12 has a configuration in which pixels 81 are arranged in a circuit with horizontal control lines (CL) and vertical signal lines (DL) arranged in a matrix. The pixel 81 includes a thin-film transistor (TFT) 86 which is connected to an organic electroluminescent device 85. One terminal of the TFT 86 is connected to the control line and the other terminal is connected to the signal line. The signal line is connected a signal line drive circuit 82. In addition, the control line is connected to a control line drive circuit 83. The signal line drive circuit 82 and the control line drive circuit 83 are controlled by a controller 84.

A drive current for driving the organic electroluminescent device 85 is monitored by the signal line drive circuit 82, the control line drive circuit 83, and (or) the controller 84. When the drive current falls below a given current (for example, 30 mA as in the first embodiment), the driving of the organic electroluminescent device 85 is stopped.

A leakage caused when the display device 80 is driven at a low current along with the voltage drop of a battery for driving the display device, can be prevented. Similarly to the case of the first embodiment, in this embodiment, the rise time and fall time of the drive current is preferably within 2 milliseconds.

According to the above-described embodiments and examples, defects caused by a leakage current can be suppressed. As a result, a light emitting device, a display device, and a method of driving an organic electroluminescent device which prevents the lifetime of the device from being shortened can be provided.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A light emitting device **characterized by** comprising:
an organic electroluminescent device (10) that includes a first electrode, a light emitting layer arranged above the first electrode, and a second electrode arranged above the light emitting layer;
a drive circuit configured to supply a drive current between the first electrode and the second electrode to drive the organic electroluminescent device (10); and
a drive stop circuit configured to stop driving of the organic electroluminescent device (10) when a value of the drive current falls below a predetermined value.

2. The device according to claim 1, **characterized in that** the predetermined value is higher than 0 mA and equal to or lower than 30 mA.

3. The device according to claim 1, **characterized in that** at least one of a rise time of the drive current to rise from a value of zero to a value equal to or higher than the predetermined value and a fall time of the drive current to fall from the predetermined value to zero is within 2 milliseconds.

4. The device according to claim 1, **characterized in that** the predetermined value is set in a range in which light is not emitted by the organic electroluminescent device (10).

5. The device according to claim 1, **characterized in that** the predetermined value is set in a range in which light emitted by the organic electroluminescent device (10) is less than a threshold amount.

6. A method of driving an organic electroluminescent device (10) including a first electrode, a light emitting layer arranged above the first electrode, and a second electrode arranged above the light emitting layer, **characterized by** comprising:
supplying a drive current between the first electrode and the second electrode to drive the organic electroluminescent device (10); and
stopping driving of the organic electroluminescent device (10) when a value of the drive current falls below a predetermined value.

7. The method according to claim 6, **characterized in that** the predetermined value is set in a range in which light is not emitted by the organic electroluminescent device (10).

8. The method according to claim 6, **characterized in that** the predetermined value is set in a range in which light emitted by the organic electroluminescent device (10) is less than a threshold amount.

9. A light emitting device **characterized by** comprising:
an organic electroluminescent device (10) that includes a first electrode, a light emitting layer arranged above the first electrode, and a second electrode arranged above the light emitting layer; and
a drive circuit configured to supply a drive current between the first electrode and the second electrode to drive the organic electroluminescent device (10),
**characterized in that** the drive circuit is configured to operate in a mode that does not cause a leakage current to be generated at a spot on the organic electroluminescent device (10) where leakage current may otherwise be generated.

10. The device according to claim 9, **characterized in that** at least one of a rise time of the drive current, when the drive current is going through a low-current region in which light is not emitted and a fall time of the drive current, when the drive current is going through the low-current region, is less than a threshold value.

11. The device according to claim 10, **characterized in that** the threshold value is 2 milliseconds.

12. The device according to claim 9, **characterized in that** at least one of a rise time of the drive current, when the drive current is going through a low-current region in which light emitted by the organic electroluminescent device (10) is less than a threshold amount and a fall time of the drive current, when the drive current is going through the low-current region is less than a threshold value.

13. The device according to claim 12, **characterized in that** the threshold value is 2 milliseconds.

14. A display device **characterized by** comprising a light emitting device in accordance with any one of claims 9 to 13.
